# EUROPEAN PATENT SPECIFICATION

(11) **EP 2 931 399 B1**
(45) Date of publication and mention of the grant of the patent: **20.03.2019**
(21) Application number: 13812193.4
(22) Date of filing: 12.12.2013
(51) Int. Cl.: B01D 15/18

(54) **HIGHLY PRODUCTIVE SIMULATED MOVING BED CHROMATOGRAPHIC SEPARATION**
HOCHPRODUKTIVES CHROMATOGRAFISCHES TRENNVERFAHREN MIT SIMULIERTEM BEWEGLICHEM BETT
SÉPARATION CHROMATOGRAPHIQUE À LIT MOBILE SIMULÉ HAUTEMENT PRODUCTIF

(30) Priority: 12.12.2012 EP 12196658
(43) Date of publication of application: 21.10.2015
(73) Proprietor: Stichting Wageningen Research, 6708 PB Wageningen (NL)
(72) Inventor: VROON, Ronald Cornelis, 6721 BP Bennekom (NL); BOON, Moniek Afra, 3931 VK Woudenberg (NL); BUSSMANN, Paulus Josephus Theodorus, 7325 AG Apeldoorn (NL)
(74) Representative: V.O.
(86) International application number: PCT/NL2013/050897
(87) International publication number: WO 2014/092573

(56) References cited:
- EP-A1- 1 166 840
- WO-A1-2012/125313
- FR-A1- 2 946 547
- US-A- 5 433 847
- US-A1- 2007 075 022

## Description

The invention is directed to a simulated moving bed chromatographic separation process, and to a simulated moving bed chromatography apparatus for carrying out said process.

Separation technology is very important in many different industries, including food industry. The separation of various components is often crucial for obtaining the desirable product and/or removing undesirable components. In food industry, for example, it often occurs that a product stream needs to be purified from undesirable components, or desirable ingredients need to be recovered from a process stream. For such separations many different techniques have been developed.

One of the well-known separation techniques is chromatography, which refers to the separation of a mixture using a fluid mobile phase, which carries the mixture through a structure, the stationary phase. The various components in the mixture travel at different speeds, causing them to separate. The separation is based on differential partitioning between the mobile and stationary phases. Subtle differences in a compound's partition coefficient result in differential retention on the stationary phase and thus changing the separation.

Many different types of chromatography are known. They may be classified i) based on chromatographic bed shape, such as column chromatography and planar chromatography (including paper chromatography and thin film chromatography), ii) based on physical state of the mobile phase, such as gas chromatography and liquid chromatography, iii) based on separation mechanism, such as ion exchange chromatography, size exclusion chromatography, and affinity chromatography, or iv) based on special techniques, two-dimensional chromatography, simulated moving bed chromatography, pyrolysis gas chromatography, fast protein liquid chromatography, and counter-current chromatography. These examples, however, should not necessarily be considered as being mutual exclusive.

These various types of chromatography techniques each have their own advantages and disadvantages. Some techniques have been found to be applicable on laboratory or preparative scale, while other techniques are commonly used in large scale production processes.

In food industry, it has been conceived as difficult so far to upscale specific separation processes (such as fractionation by size exclusion chromatography and adsorption chromatography), in particular where specific mixtures are involved. Examples of such mixtures include mixtures of salt and protein (such as salt and whey protein), mixtures of sugar and protein (such as lactose and milk protein), mixtures of sugar and salt (such as lactose and salt, or sucrose and salt), mixtures of oligosaccharides, mixtures of proteins, and fruit juices containing sugars and acids. Although separation of such mixtures with the above mentioned chromatographic separation processes is possible on a laboratory scale, the scaling up of such processes results in expensive equipment (high capital expenditure, CAPEX), as well as in considerable operational costs (high operating expenditure, OPEX). The expensive equipment is, for instance, caused by the need of a considerable amount of stationary phase material. Such material is typically expensive. The high operational costs are mainly due to a product dilution as a result of considerable eluent use to carry the mixture through the stationary phase.

While in theory, scaling up can be achieved by keeping the bed height constant and only increase the diameter of the column, in practice this often requires re-optimisation and decrease of flow rate. Even if one were able to keep the column bed height the same, there are additional disadvantages such as the large space utilisation and problems in achieving a homogeneous column packing and avoiding channelling.

Some efforts have been made in the art to overcome these drawbacks. For instance, by downsizing existing systems a lowering of the CAPEX can be achieved. A precondition for downsizing, however, is that the mass transfer rate is increased. Previous studies have focused on such increase of the mass transfer rate by using, for example, monoliths or relatively small particles as stationary phase.

Schulte et al. (Journal of Chromatography A 2001, 923(1-2), 177-25) have described simulated moving bed chromatography of the separation of diastereomers using monolithic silica sorbents. According to Schulte *et al.,* the separation capacity of a simulated moving bed system depends on three main parameters: the saturation capacity of the stationary phase, the peak resolution (combining efficiency and selectivity) and the system pressure drop (depending on the mobile phase flow rate). Schulte *et al.* stated that a given separation on a certain stationary phase with an optimised saturation capacity can be enhanced in terms of mobile phase velocity until the maximum system pressure drop is reached or the efficiency of the sorbent decreases at higher flow rates due to the increasing influence of the intra-particle diffusion. Schulte *et al.* mentioned that only a limited maximum linear velocity could be achieved using standard particulate silica materials. However, they indicated that the flow rates of a simulated moving bed system could be linearly increased if the pressure drop and efficiency problem could be overcome, thereby resulting in a much higher productivity. The solution presented by Schulte *et al.* consisted in the use of a monolithic silica sorbent. High linear velocities could be achieved due to the low pressure drop of the monolithic silica sorbent in combination with its high efficiency, even at high flow rates. Monolithic materials, however, have some disadvantages. Monoliths are mainly organic polymer -based and silica-based. Organic polymer-based monoliths typically suffer from a limited capacity due to the absence of internal porosity of the matrix. Silica-based monoliths, on the other hand, typically suffer from a low chemical stability which in turn limits the cleaning conditions which are required, for instance, in food industry (alkaline pH at elevated temperatures). Moreover, there is limited availability of monoliths regarding specific functionality (such as matrix (a)polarity, pore size distribution) and volume (only analytical and preparative scale), making monoliths very expensive for full-scale application.

Gustavsson et al. (Journal of Chromatography A 2001, 925(1-2), 69-78) also disclose the use of a continuous monolithic bed as being favourable in terms of their flow rate/pressure drop relationship. Gustavsson *et al.* disclose the use of a continuous superporous agarose bed, but discovered a problem when large diameter beds were prepared and used for chromatography purposes. During preparation of such large diameter beds the central parts solidified considerably later than the outer part, thereby resulting in an uneven distribution of flow pore size. In order to avoid this problem, Gustavsson *et al.* investigated the combination of radial flow column technology and continuous superporous beds. Gustavsson *et al.* found that this allowed an improvement of the flow rates while maintaining a relatively low pressure drop.

The use of a small size particulate stationary phase has been discouraged in the prior art. For example, Bidlingmaier et al. (Journal of Chromatography A 1999, 832(1-2), 11-16) made a comparative study on the column performance of a column with a 5 µm particulate stationary phase and a column with a monolithic silica stationary phase. Although the chromatographic efficiency of both columns was approximately the same, the monolithic stationary phase gave three to five times lower pressure drop. This considerably pressure drop has discouraged scientists to further investigate the potential of small size particulate stationary phases.

WO-A-2012/125313 describes a radial flow apparatus modified to be suitable for simulated moving bed chromatography. The mobile liquid phase is pumped in radial direction through a stationary phase. The stationary phase is segmented with inlets and outlets of process streams (feed, eluent, extract and raffinate) fixed at specific locations. By switching these inlets and outlets along the segments a movement of the stationary phase is simulated. The apparatus described in WO-A-2012/125131 only has one rotating device which is divided in multiple segments. WO-A-2012/125131 does not disclose a particulate stationary phase.

US-A-5 433 847 describes a radial flow chromatograph in which the bed is tightly compressed and an absorbent is used with a particle diameter of preferably less than 100 µm. According to this document, the mean particle diameter should be less than about 0.05 times the height of the cylinder (*i.e.* the dimension of the cylinder in the axial direction). US-A-5 433 847 teaches that a thinner bed (*i.e.* one with smaller height) has a performance which is superior to that of a thicker bed. US-A-5 433 847 does not relate to simulated moving bed technology.

There remains a need for improvements in chromatographic separation techniques, in particular for large scale applications in industry. A particular need is to provide a separation technique with improved separation efficiency so as to allow significant reduction in equipment size. Advantages of this scale reduction are i) reduced investment cost (CAPEX), ii) possibilities to apply more expensive stationary phases, and iii) less complicated implementation within the (existing) production process.

One object of the invention is to provide an improved chromatographic separation process based on a small size particulate stationary phase, which overcomes one or more of the above-mentioned disadvantages faced in the art.

A further object of the invention is to provide a chromatographic separation process which combines high flow rates and high chromatographic efficiencies with a small pressure drop.

The inventors found that one or more of these objects can, at least in part, be met by combining a small size particulate stationary phase with a simulated moving bed technique wherein multiple radial flow columns are applied.

Accordingly, in a first aspect the invention is directed to a simulated moving bed chromatographic separation process, comprising the steps of applying a feed mixture and a mobile phase in which said feed mixture is soluble to a simulated moving bed comprising a particulate stationary phase, and separating said feed mixture into an extract and a raffinate,
wherein said simulated moving bed comprises multiple radial flow columns connected in series into a loop, and
wherein the particulate stationary phase has a median particle diameter of 100 µm or less.

The application of a small size particulate stationary phase significantly lowers the resistance to mass transfer by shortening the path length for mass transfer. The enhanced mass transfer results in an improved chromatographic efficiency, because the components are separated better. As a result, the column length (and accordingly, the volume of the required equipment) can favourably be reduced. As suggested in the art, the use of a small size particulate stationary phase results in an increase in pressure drop. However, this effect can be largely compensated by the improved chromatographic efficiency and resulting reduction in column length. In an embodiment, sufficient volumetric capacity is achieved in accordance with the invention by application of radial flow columns. In a radial flow column design, flow is directed from the outer periphery of the column in a radial direction through an annular stationary phase bed to the column exit. The peripheral area of the column forms a large application area, which is combined with a small bed height (radial thickness of the bed). Scale up can be accomplished by simply making the column taller. As a result, high flow rates and low pressure drops are achieved. Surprisingly, and in contrast to for example the device described in US-A-5 433 847, this does not (or hardly) result in a significant loss of resolution in the chromatographic separation.

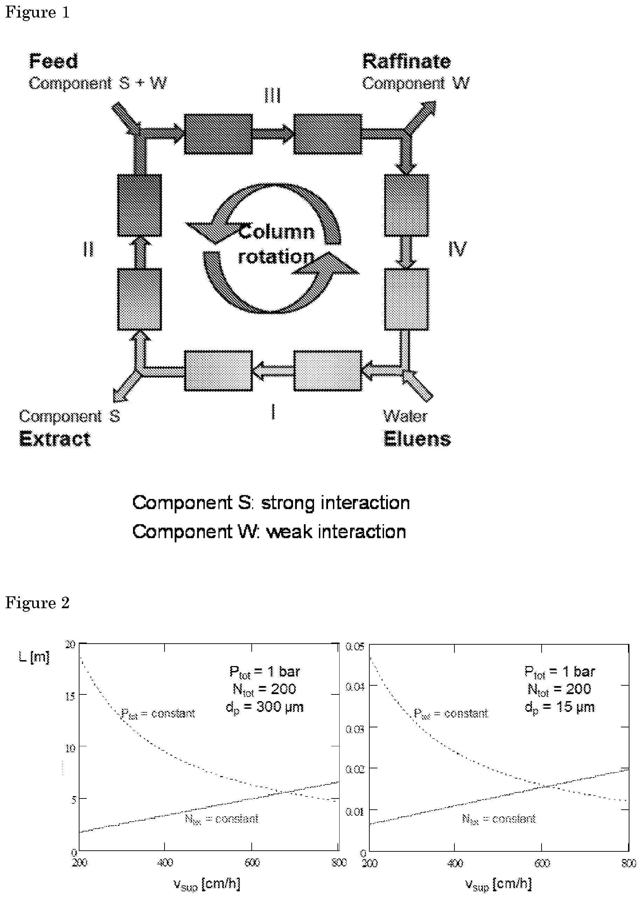

Moreover, product dilution as a result of considerable eluent use is limited in the process of the invention because the chromatographic separation is performed in a simulated moving bed configuration. Such a configuration benefits from less eluent and less resin as compared to a normal chromatography configuration. The principle of simulated moving bed technology is schematically depicted in figure 1. A feed mixture of two components is separated into a raffinate and an extract using water as eluent. The mobile phase flows in a clockwise direction through the various columns (eight in the embodiment of figure 1). The raffinate contains the component that has a weaker interaction with the stationary phase, while the extract contains the component that has a stronger interaction with the stationary phase. By rotation of the various columns used in the indicated direction a movement of the bed is simulated in a direction opposite to the mobile phase.

Furthermore, since the invention yields significant improvement in separation efficiency and reduction in equipment size, stationary phases (such as resins) that were hitherto deemed inappropriate for large scale industrial applications can now be considered as possible stationary phase candidates. Accordingly, the invention broadens the spectrum of industrial chromatographic separation techniques.

The term "mobile phase" as used in this application is meant to refer to the part of the chromatographic system which carries the feed mixture through the stationary phase. The mobile phase is preferably a fluid and can thus be either liquid or gaseous. Liquid mobile phases are used to adjust the chromatographic separation and retention in liquid chromatography. The temperature of a gas mobile phase is used to adjust the retention in gas chromatography.

The term "stationary phase" as used in this application is meant to refer to the part of the chromatographic system through which the mobile phase flows and where distribution of the feed mixture between the phases occurs.

The term "extract" as used in this application is meant to refer to the component(s) that is(are) more adsorbed to or retarded in the stationary phase.

The term "raffinate" as used in this application is meant to refer to the component(s) that is(are) less adsorbed to or retarded in the stationary phase.

In accordance with the invention a mobile phase and a feed mixture are applied to a simulated moving bed. Simulated moving bed chromatography is known (*e.g.* Juza et al., Trends in Biotechnology 2000, 18(3), 108-118) and is used to implement a very close approximation of the imaginary true moving bed chromatography. It involves the simulation of the stationary phase by using multiple columns connected in series into a loop and periodically moving the inlet and outlet ports to the columns in the same direction as the fluid flow.

The mobile phase can be a fluid, such as a liquid. Typically, the mobile phase comprises one or more solvents. Optionally, the mobile phase may be applied as a gradient, such as a salt gradient, pH gradient, or solvent gradient. In an embodiment, the mobile phase consists of solvent. Preferably, the mobile phase comprises one or more solvents that are commonly used in liquid chromatography and are graded as food-grade solvents. Preferably, the mobile phase comprises one or more solvents selected from the group consisting of water, monohydric alcohols (such as methanol, ethanol, propanol, butanol), polyhydric alcohols (such as glycerol, propylene glycol), polyethers (such as polyethylene glycol), and alkanes (such as hexane). In an embodiment, the mobile phase comprises one or more organic solvents selected from the group consisting of methanol, ethanol, propanol, and butanol. In an embodiment, the mobile phase comprises water.

The feed mixture is soluble in the mobile phase. In a preferred embodiment the feed mixture is completely dissolved in the mobile phase. The feed mixture can comprise two or more components. Preferably, the feed mixture does not comprise more than 50 components. In an embodiment, the feed mixture comprises 2-25 components. The feed mixture can comprise one or more organic components. Such components are typically of organic origin and may be present in process streams in agro-food industry, biotech industry and biorefining industry. Some examples of such organic components include components selected from the group consisting peptides, proteins, oligosaccharides, salts, sugars, organic acids, alkaloids, polyphenols, and vitamins. The feed mixture can, for instance, comprise one or more mixtures selected from the group consisting of a mixture of salts and proteins, a mixture of sugars and proteins, a mixture of sugars and salts, a mixture of two or more oligosaccharides, a mixture of two or more proteins, and a mixture of sugars and acids. The present invention can advantageously be used for food separation processes. Accordingly, preferably one or more components in the feed mixture are edible, and more preferably the feed mixture is edible. The term "edible" as used in this application is meant to includes anything that can be consumed, eaten, drank, or otherwise ingested. Accordingly, an edible feed mixture is a mixture of components that may be in a solid form, a dissolved or liquid form, a crystal form, or any other form and may be consumed, eaten, drank, other otherwise ingested.

Although in accordance with the invention the feed mixture is separated in an extract and a raffinate, it is possible with the invention to separate more than two components (multicomponent separation) by using extended multi-section simulated moving beds or by using multiple simulated moving bed systems in series. For example the extract and/or raffinate which result from a first simulated moving bed section or system can be forwarded to a subsequent simulated moving bed section or system for further separation. Typically, in such multicomponent separation the multi-section simulated moving beds will comprise the same type of stationary phase and the same or a different mobile phase. Regarding the multiple simulated moving bed systems in series, these systems will typically comprise the same or a different type of stationary phase and the same or a different mobile phase. Further, other process parameters (such as liquid flow velocities, column switch times, and feed concentration) can be adjusted to realise a different mode of operation (such as asynchronous column switching, modulation of flow rates, and modulation of feed concentration).

In an embodiment the mobile phase and/or the feed mixture is applied continuously to the simulated moving bed to allow a continuous operation of the process of the invention.

The feed mixture is separated in the process of the invention into an extract and a raffinate, which are preferably collected separately.

The simulated moving bed used in the process of the invention comprises multiple columns connected in series into a loop. This means that the exit from each column is connected to the entrance of the next column and all columns are linked in this manner into a loop. The amount of columns determines to what extent a true moving bed is approximated. The use of more columns more closely simulate a true moving bed, but have the disadvantage of requiring space and equipment. Preferably, 4-24 columns are applied in series, more preferably 4-16 columns, such as 4-12 columns. Each of the columns is packed with the same type of stationary phase.

In accordance with the process of the invention the multiple columns are radial flow columns. This is a particularly advantageous embodiment, since radial flow columns can combine a large application area with a small bed height (corresponding to the radial thickness of the bed). Depending on the application, the radial thickness can vary widely. Typically, however, the radial thickness can suitably be in the range of 0.5-40 cm, preferably in the range of 1-20 cm.

In accordance with the invention, the stationary phase comprises a particulate. The particulate may be solid or porous. The solid particulate stationary phase may optionally comprise a liquid that is immobilised or adsorbed on the particles.

The particulate stationary phase of the simulated moving bed has a median particle diameter of 100 µm or less, preferably 80 µm or less, more preferably 60 µm or less. In an embodiment, the particulate stationary phase has a median particle diameter in the range of 5-100 µm, more preferably in the range of 5-60 µm, such as in the range of 10-35 µm. The term "particle diameter" as used in this application is meant to refer to an equivalent spherical diameter, which is the diameter of a sphere of equivalent volume. Hence, in case the particles are spherical, then the particle diameter corresponds to the actual diameter of the spherical particle.

The median particle size of the stationary phase of the simulated moving bed is defined in terms of d₅₀, wherein d₅₀ is the particle diameter where 50 volume percentage of the distribution lies below this value. This parameter can be suitably measured using, for instance, laser diffraction, and is one of the most meaningful parameters for particle size distributions.

The particle size distribution of the stationary phase of the simulated moving bed can be defined in terms of dio and d₉₀, wherein d₁₀ is the particle diameter where 10 volume percentage of the distribution lies below this value and wherein d₉₀ is the particle diameter wherein 90 volume percentage of the distribution lies below this value. These parameters can be suitably measured using, for instance, laser diffraction. The ratio between d₉₀ and d₁₀, d₉₀/d₁₀ correlates to the particle size distribution width and is an indication as to the uniformity of the distribution of particle sizes and as to its separation performance. In a preferred embodiment of the invention, the particle size distribution of the particulate stationary phase is specified by a d₉₀/d₁₀ ≤ 2 and/or a d₆₀/d₁₀ ≤ 1.7. In an embodiment, the d₉₀/d₁₀ of the particulate stationary phase of the simulated moving bed is 2 or less, preferably 1.95 or less, more preferably 1.9 or less. In an embodiment, the d₆₀/d₁₀ of the particulate stationary phase of the simulated moving bed is 1.7 or less, preferably 1.65 or less, more preferably 1.6 or less, wherein d₆₀ is the particle diameter where 60 volume percentage of the distribution lies below this value.

The particle diameters and particle size distributions (PSD) as mentioned herein can suitably be determined by laser diffraction. This technique, also known as Static Light Scattering has become the dominant method used in industrial PSD determination. Results are reported on an Equivalent Spherical Diameter Volume basis.

The stationary phase can comprise a size exclusion resin, an ion exclusion resin, an ion exchange resin and/or an adsorbent. Examples of suitable particulate stationary phases include one or more selected from the group consisting of inorganic resins (such as zeolite based resins, silica based resins), organic polymer based resins (such as methacrylate based polymers, polystyrene-divinylbenzene based polymers, acrylamide based polymers), agarose based resins, dextran based resins, and cellulose based resins.

Normally, a singly type of stationary phase (*i.e.* a singly type of particles) is used for a specific separation.

The process of the invention can advantageously be performed continuously. However, it is also possible to perform a batch wise separation, if desired.

The process of the invention can be well controlled by means of several parameters that can be adjusted (even with a pre-determined type of stationary phase, and radial thickness of the columns). These parameters, for instance, include the liquid flow rates, the switch time (which is inversely proportional to the solid (stationary phase) flow rate), and the concentration of the components that need to be separated. Depending on the application and the specific desires of the user (such as productivity per day, minimum purity of the product streams, minimum dilution of the product streams, and minimum recovery of the species to be separated), the process can be optimised. Such a level of control over the process is highly advantageous and enables an exact tuning of the process to the needs of the user.

Separations that can suitably be performed with the process of the invention include, for instance, salt removal, sugar recovery, oligosaccharide fractionation, peptide fractionation, and/or protein fractionation.

In a further aspect, the invention is directed to a simulated moving bed chromatography apparatus suitable for carrying out the process of the invention.

In one embodiment, the apparatus comprises a loop of multiple columns connected in series, each column comprising a particulate stationary phase, wherein one or more of said columns are radial flow columns, and wherein said loop comprises, each between two separate columns, an inlet for feed mixture, an outlet for extract, an inlet for eluent, and an outlet for raffinate, wherein the inlets and outlets can be occasionally switched in rotating manner over the loop such that each of the inlets and outlets switches from a first position between two separate columns to a second position between two different columns, and wherein the particulate stationary phase of said simulated moving bed has a median particle diameter of 100 µm or less. In this embodiment, the apparatus of the invention has fixed positions for the columns and the inlets and outlets are occasionally switched in rotating manner over the loop so as to create a simulated moving bed. Hence, in this embodiment the inlets and outlets in effect rotate over the fixed loop of multiple columns.

In an alternative embodiment, the apparatus suitable for carrying out the process of the invention comprises a loop of multiple columns connected in series, each column comprising a particulate stationary phase, wherein one or more of said columns are radial flow columns, and wherein said loop comprises, each between two separate columns, an inlet for feed mixture, an outlet for extract, an inlet for eluent, and an outlet for raffinate, wherein the loop of multiple columns can be occasionally switched in rotating manner such that each of the inlets and outlets switches from a first position between two separate columns to a second position between two different columns, and wherein the particulate stationary phase of said simulated moving bed has a median particle diameter of 100 µm or less. In this embodiment, the apparatus of the invention has fixed positions for the inlets and outlets and the loops of columns is occasionally switched in rotating manner along the inlets and outlets loop so as to create a simulated moving bed. Hence, in this embodiment the loop of multiple columns in effect rotates over the fixed inlets and outlets.

### Examples

### Example 1: Calculation of potential size reduction

The possible size reduction was calculated assuming a constant number of HETP (Height Equivalent to Theoretical Plates) (to ensure the same performance) and total pressure drop.

For a given pressure, there is a relationship between the particle diameter and the velocity (based on the Ergun-Blake-Kozeny equation). For a given amount of transfer units there is also a relationship between the particle diameter and the velocity (derived from the Van Deemter equation, as described by Gritti and Guiochon in Journal of Chromatography A 2012, 1221, 2-40). These correlations are visualised in figure 2, where the column length is depicted as a function of superficial velocity for 300 µm and 15 µm. For the dotted line the total pressure drop is constant, while for the solid line the number of transfer units is constant. At the cross point the combination of velocity and particle diameter can be determined where the pressure and the number of transfer units have the required value.

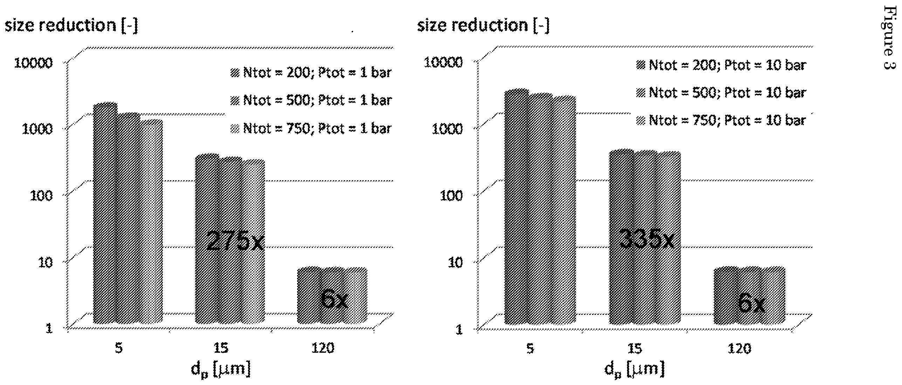

For different combinations of total transfer units (200, 500 and 750) and total pressure (1 and 10 bar) the system volume reduction was calculated, going from 300 to 120, 15 and 5 µm. Figure 3 shows the system volume reduction with constant total column pressure and number or transfer units, with a benchmark at 300 µm. This benchmark represents the particle size of resins applied in full-scale simulated moving bed processes. The volume reduction is relatively insensitive for the total number of transfer units and the total pressure. A volume reduction between 275-335 can be realised going from 300 to 15 µm particles.

The results are shown in table 1. It is possible to reduce the system volume with a factor of 264 when going from 300 µm particle diameter to 15 µm. The same results were obtained for a different total number of HETP (200 and 750) and total pressures (0.1 and 10 bar).

**Table 1 Size reduction at constant total pressure drop. Total number of HETP 500.**

| dₚ [µm] | Pₜₒₜ [bar] | vₛᵤₚ [cm/h] | L [m] | Factor [-] |
|---|---|---|---|---|
| 15 | 1 | 430 | 0.022 | 264 |
| 30 | 1 | 470 | 0.082 | 78 |
| 120 | 1 | 515 | 1.2 | 6 |
| 300 | 1 | 530 | 7.2 | 1 |

In table 1, dₚ is the particle diameter, Pₜₒₜ is the total pressure drop, vₛᵤₚ is the superficial velocity, L is the bed height (eluent runs from 0 to L), and Factor is the size reduction relative to 300 µm.

### Example 2: Calculation of column dimensions

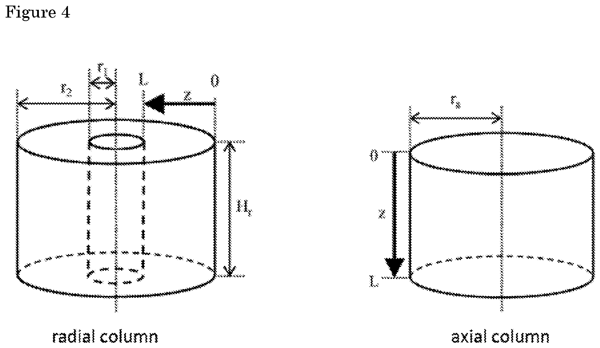

In addition to the results presented in example 1, the column dimensions were determined for different total pressure drops assuming a constant number of HETP. The dimensions were calculated for both radial flow and axial flow columns. The geometry of both column types is summarised in figure 4.

For different total pressure drops (1, 10 and 100 bar) and different resin particle diameters (300, 120, 30 and 15 µm) the dimensions of a radial and axial column configuration were calculated. The liquid feed flow was fixed at 25 m³/h. The results are shown in table 2. In this table only the column dimensions are presented which are relevant for implementation on an industrial production scale. The industrial column geometry is specified as lower and upper boundaries (bottom row in table 2). From this table it can be seen that small resin particles (< 120 µm) can be applied in both radial and axial column configurations depending on the total pressure drop.

**Table 2 Column dimensions for radial and axial columns at different total pressure drops. Total number of HETP is 500.**

| Pₜₒₜ | dₚ | radial column | | axial column | |
|---|---|---|---|---|---|
| | | L | Hᵣ | L | 2·rₐ |
| [bar] | [µm] | [m] | [m] | [m] | [m] |
| 1 | 15 | | | | |
| 1 | 30 | 0.08 | 5.2 | | |
| 1 | 120 | | | 1.2 | 2.5 |
| 1 | 300 | | | 7.2 | 2.5 |
| 10 | 15 | 0.06 | 2.1 | | |
| 10 | 30 | 0.24 | 0.52 | 0.24 | 1.4 |
| 10 | 120 | | | 3.6 | 1.4 |
| 10 | 300 | | | | |
| 100 | 15 | 0.18 | 0.21 | 0.18 | 0.78 |
| 100 | 30 | | | 0.72 | 0.78 |
| 100 | 120 | | | 11 | 0.77 |
| 100 | 300 | | | | |
| Range | | 0.02-0.5 | 0.1-5 | 0.2-10 | 0.5-2.5 |

In table 2, Pₜₒₜ is the total pressure drop, dₚ is the particle diameter, L is the bed height of the column (the eluent runs from 0 to L), Hᵣ is the column height, and rₐ is the radius of the axial column.

## Claims

1. Simulated moving bed chromatographic separation process, comprising the steps of applying a feed mixture and a mobile phase in which said feed mixture is soluble to a simulated moving bed comprising a particulate stationary phase, and separating said feed mixture into an extract and a raffinate,
wherein said simulated moving bed comprises multiple radial flow columns connected in series into a loop, and
wherein the particulate stationary phase of said simulated moving bed has a median particle diameter of 100 µm or less.

2. Simulated moving bed chromatographic separation process according to claim 1, wherein the particulate stationary phase has a median particle diameter in the range of 5-100 µm, preferably 5-60 µm, more preferably 10-35 µm.

3. Simulated moving bed chromatographic separation process according to claim 1 or 2, wherein said particles have
(i) a d₉₀/d₁₀ of 2 or less, preferably 1.95 or less, even more preferably 1.9 or less; and/or
(ii) a d₆₀/d₁₀ of 1.7 or less, preferably 1.65 or less, more preferably 1.6 or less.

4. Simulated moving bed chromatographic separation process according to any one of claims 1-3, wherein said mobile phase is a fluid.

5. Simulated moving bed chromatographic separation process according to any one of claims 1-4, wherein said particles are solid or porous, preferably said particles comprise a liquid that is immobilised or adsorbed on the particles.

6. Simulated moving bed chromatographic separation process according to any one of claims 1-5, wherein said stationary phase comprises one or more selected from the group consisting of inorganic resins, such as zeolite based resins, silica based resins; organic polymer based resins, such as (meth)acrylate based polymers, polystyrene-divinylbenzene based polymers, acrylamide based polymers; agarose based resins; dextran based resins; and cellulose based resins.

7. Simulated moving bed chromatographic separation process according to any one of claims 1-6, wherein said feed mixture comprises 2-50 components, preferably 2-25 components, more preferably 2-10 components.

8. Simulated moving bed chromatographic separation process according to any one of claims 1-7, wherein said feed mixture comprises one or more selected from the group consisting peptides, proteins, oligosaccharides, salts, sugars, organic acids, alkaloids, polyphenols, and/or vitamins.

9. Simulated moving bed chromatographic separation process according to any one of claims 1-8, wherein said mobile phase comprises one or more solvents selected from the group consisting of water, monohydric alcohols, polyhydric alcohols, polyethers, and alkanes.

10. Simulated moving bed chromatographic separation process according to any one of claims 1-9, wherein the amount of columns connected in series is in the range of 4-24, preferably 4-16, more preferably 4-12.

11. Simulated moving bed chromatographic separation process according to any one of claims 1-10 for salt removal, sugar recovery, oligosaccharide fractionation, peptide fractionation, and/or protein fractionation.

12. Simulated moving bed chromatographic separation process according to any one of claims 1-11, wherein said process is a continuous process.

13. Simulated moving bed chromatographic separation process according to any one of claims 1-12, wherein said extract and/or said raffinate are subjected to a further separation step, such as a further chromatographic separation step of any one of claims 1-9.

14. Simulated moving bed chromatographic apparatus suitable for carrying out the process of any one of claims 1-13, comprising a loop of radial flow columns connected in series, each column comprising a particulate stationary phase, and wherein said loop comprises, each between two separate columns, an inlet for feed mixture, an outlet for extract, an inlet for eluent, and an outlet for raffinate, wherein
(a) the inlets and outlets can be occasionally switched in rotating manner over the loop such that each of the inlets and outlets switches from a first position between two separate columns to a second position between two different columns, or
(b) the loop of multiple columns can be occasionally switched in rotating manner such that each of the inlets and outlets switches from a first position between two separate columns to a second position between two different columns, and
wherein the particulate stationary phase of said simulated moving bed has a median particle diameter of 100 µm or less.

15. Simulated moving bed chromatographic apparatus according to claim 14, wherein the radial thickness of the stationary phase is in the range of 0.5-40 cm, preferably 1-20 cm.

## Patentansprüche

1. Chromatografisches Trennverfahren mit simuliertem beweglichem Bett, umfassend die Schritte, in denen ein Zuführgemisch und eine mobile Phase, in der das Zuführgemisch löslich ist, auf ein simuliertes bewegliches Bett, umfassend eine stationäre Schwebstoffphase, angewendet wird und das Zuführgemisch in einen Extrakt und ein Raffinat getrennt wird,
wobei das simulierte bewegliche Bett mehrere Radialstromsäulen, in Serie verbunden in einer Schleife, umfasst und
wobei die stationäre Schwebstoffphase des simulierten beweglichen Betts einen mittleren Partikeldurchmesser von 100 µm oder weniger hat.

2. Chromatografisches Trennverfahren mit simuliertem beweglichem Bett nach Anspruch 1, wobei die stationäre Schwebstoffphase einen mittleren Partikeldurchmesser im Bereich von 5-100 µm, bevorzugt 5-60 µm, bevorzugter 10-35 µm, hat.

3. Chromatografisches Trennverfahren mit simuliertem beweglichem Bett nach Anspruch 1 oder 2, wobei die Partikel
(i) einen d₉₀/d₁₀ von 2 oder weniger, bevorzugt 1,95 oder weniger, noch bevorzugter 1,9 oder weniger; und/oder
(ii) einen d₆₀/d₁₀ von 1,7 oder weniger, bevorzugt 1,65 oder weniger, noch bevorzugter 1,6 oder weniger
aufweisen.

4. Chromatografisches Trennverfahren mit simuliertem beweglichem Bett nach einem der Ansprüche 1-3, wobei die mobile Phase eine Flüssigkeit ist.

5. Chromatografisches Trennverfahren mit simuliertem beweglichem Bett nach einem der Ansprüche 1-4, wobei die Partikel fest oder porös sind, bevorzugt die Partikel eine Flüssigkeit umfassen, die auf den Partikeln immobilisiert oder adsorbiert ist.

6. Chromatografisches Trennverfahren mit simuliertem beweglichem Bett nach einem der Ansprüche 1-5, wobei die stationäre Phase eines oder mehrere umfasst, ausgewählt aus der Gruppe, bestehend aus anorganischen Harzen wie etwa Harze auf der Basis von Zeolith, Harze auf der Basis von Silica; organische Harze auf Polymerbasis, wie etwa Polymere auf der Basis von (Meth)acrylat), Polymere auf der Basis von Polystyroldivinylbenzen, Polymere auf der Basis von Acrylamid; Harze auf der Basis von Agarose; Harze auf der Basis von Dextran; und Harze auf der Basis von Zellulose.

7. Chromatografisches Trennverfahren mit simuliertem beweglichem Bett nach einem der Ansprüche 1-6, wobei das Zuführgemisch 2-50 Bestandteile umfasst, bevorzugt 2-25 Bestandteile, bevorzugter 2-10 Bestandteile.

8. Chromatografisches Trennverfahren mit simuliertem beweglichem Bett nach einem der Ansprüche 1-7, wobei das Zuführgemisch eines oder mehrere umfasst, ausgewählt aus der Gruppe, bestehend aus Peptiden, Proteinen, Oligosacchariden, Salzen, Zuckern, organischen Säuren, Alkaloiden, Polyphenolen und/oder Vitaminen.

9. Chromatografisches Trennverfahren mit simuliertem beweglichem Bett nach einem der Ansprüche 1-8, wobei die mobile Phase ein oder mehrere Lösungsmittel umfasst, ausgewählt aus der Gruppe, bestehend aus Wasser, monohydrischen Alkoholen, polyhydrischen Alkoholen, Polyethern und Alkanen.

10. Chromatografisches Trennverfahren mit simuliertem beweglichem Bett nach einem der Ansprüche 1-9, wobei die Menge in Serie verbundener Säulen im Bereich von 4-24 ist, bevorzugt 4-16, bevorzugter 4-12.

11. Chromatografisches Trennverfahren mit simuliertem beweglichem Bett nach einem der Ansprüche 1-10 zur Salzentfernung, Zuckerwiedergewinnung, Oligosaccharid-Fraktionierung, Peptid-Fraktionierung und/oder Protein-Fraktionierung.

12. Chromatografisches Trennverfahren mit simuliertem beweglichem Bett nach einem der Ansprüche 1-11, wobei das Verfahren ein kontinuierliches Verfahren ist.

13. Chromatografisches Trennverfahren mit simuliertem beweglichem Bett nach einem der Ansprüche 1-12, wobei der Extrakt und/oder das Raffinat einem weiteren Trennschritt unterzogen werden, wie etwa einem weiteren chromatografischen Trennschritt nach einem der Ansprüche 1-9.

14. Chromatografische Vorrichtung mit simuliertem beweglichem Bett geeignet zum Ausführen des Verfahrens nach einem der Ansprüche 1-13, umfassend eine Schleife radialer in Serie verbundener Flusssäulen, jede Säule umfassend eine stationäre Schwebstoffphase, und wobei die Schleife jeweils zwischen zwei getrennten Säulen einen Einlass für Zuführgemisch, einen Auslass für Extrakt, einen Einlass für Eluent und einen Auslass für Raffinat umfasst, wobei
(a) die Einlässe und Auslässe gelegentlich rotierend über die Schleife umgeschaltet werden können, sodass jeder der Einlässe und Auslässe von einer ersten Position zwischen zwei separaten Säulen zu einer zweiten Position zwischen zwei verschiedenen Säulen schaltet, oder
(b) die Schleife mehrerer Säulen gelegentlich rotierend umgeschaltet werden kann, sodass jeder der Einlässe und Auslässe von einer ersten Position zwischen zwei separaten Säulen zu einer zweiten Position zwischen zwei verschiedenen Säulen schaltet, und
wobei die stationäre Schwebstoffphase des simulierten beweglichen Betts einen mittleren Partikeldurchmesser von 100 µm oder weniger hat.

15. Chromatografische Vorrichtung mit simuliertem beweglichem Bett nach Anspruch 14, wobei die radiale Dicke der stationären Phase im Bereich von 0,5-40 cm, bevorzugt 1-20 cm, ist.

## Revendications

1. Procédé de séparation chromatographique sur lit mobile simulé, comprenant les étapes consistant à appliquer un mélange d'alimentation et une phase mobile dans laquelle ledit mélange d'alimentation est soluble dans un lit mobile simulé comprenant une phase stationnaire particulaire, et à séparer ledit mélange d'alimentation en un extrait et un raffinat,
dans lequel ledit lit mobile simulé comprend plusieurs colonnes à écoulement radial connectées en série dans une boucle, et
dans lequel la phase stationnaire particulaire dudit lit mobile simulé a un diamètre de particule moyen de 100 µm ou moins.

2. Procédé de séparation chromatographique sur lit mobile simulé selon la revendication 1, dans lequel la phase stationnaire particulaire a un diamètre de particule moyen dans la plage de 5 à 100 µm, de préférence de 5 à 60 µm, de manière plus préférée de 10 à 35 µm.

3. Procédé de séparation chromatographique sur lit mobile simulé selon la revendication 1 ou 2, dans lequel lesdites particules ont
(i) un d₉₀/d₁₀ de 2 ou moins, de préférence de 1,95 ou moins, de manière encore plus préférée de 1,9 ou moins ; et/ou
(ii) un d₆₀/d₁₀ de 1,7 ou moins, de préférence de 1,65 ou moins, de manière plus préférée de 1,6 ou moins.

4. Procédé de séparation chromatographique sur lit mobile simulé selon l'une quelconque des revendications 1 à 3, dans lequel ladite phase mobile est un fluide.

5. Procédé de séparation chromatographique sur lit mobile simulé selon l'une quelconque des revendications 1 à 4, dans lequel lesdites particules sont solides ou poreuses, de préférence lesdites particules comprennent un liquide immobilisé ou adsorbé sur les particules.

6. Procédé de séparation chromatographique sur lit mobile simulé selon l'une quelconque des revendications 1 à 5, dans lequel ladite phase stationnaire comprend une ou plusieurs sélectionnées le groupe constitué de résines inorganiques, telles que des résines à base de zéolite, des résines à base de silice ; de résines à base de polymère organique, telles que des polymères à base de (méth)acrylate, des polymères à base de polystyrène-divinylbenzène, des polymères à base d'acrylamide ; de résines à base d'agarose ; de résines à base de dextrane ; et de résines à base de cellulose.

7. Procédé de séparation chromatographique sur lit mobile simulé selon l'une quelconque des revendications 1 à 6, dans lequel ledit mélange d'alimentation comprend 2 à 50 composants, de préférence 2 à 25 composants, de manière plus préférée 2 à 10 composants.

8. Procédé de séparation chromatographique sur lit mobile simulé selon l'une quelconque des revendications 1 à 7, dans lequel ledit mélange d'alimentation comprend un ou plusieurs sélectionnés dans le groupe constitué de peptides, de protéines, d'oligosaccharides, de sels, de sucres, d'acides organiques, d'alcaloïdes, de polyphénols et/ou de vitamines.

9. Procédé de séparation chromatographique sur lit mobile simulé selon l'une quelconque des revendications 1 à 8, dans lequel ladite phase mobile comprend un ou plusieurs solvants sélectionnés dans le groupe constitué par de l'eau, des alcools monohydriques, des alcools polyhydriques, des polyéthers et des alcanes.

10. Procédé de séparation chromatographique sur lit mobile simulé selon l'une quelconque des revendications 1 à 9, dans lequel la quantité de colonnes connectées en série se situe dans la plage de 4 à 24, de préférence de 4 à 16, de manière plus préférée de 4 à 12.

11. Procédé de séparation chromatographique sur lit mobile simulé selon l'une quelconque des revendications 1 à 10 pour un retrait de sel, une récupération de sucre, un fractionnement d'oligosaccharide, un fractionnement de peptide et/ou un fractionnement de protéine.

12. Procédé de séparation chromatographique sur lit mobile simulé selon l'une quelconque des revendications 1 à 11, dans lequel ledit procédé est un procédé continu.

13. Procédé de séparation chromatographique sur lit mobile simulé selon l'une quelconque des revendications 1 à 12, dans lequel ledit extrait et/ou ledit raffinat sont soumis à une étape de séparation supplémentaire, telle qu'une étape de séparation chromatographique supplémentaire selon l'une quelconque des revendications 1 à 9.

14. Appareil de chromatographie sur lit mobile simulé apte à mettre en oeuvre le procédé selon l'une quelconque des revendications 1 à 13, comprenant une boucle de colonnes à écoulement radial connectées en série, chaque colonne comprenant une phase stationnaire particulaire, et dans lequel ladite boucle comprend entre chaque paire de colonnes séparées, une entrée pour le mélange d'alimentation, une sortie pour l'extrait, une entrée pour l'éluant et une sortie pour le raffinat, dans lequel
(a) les entrées et les sorties peuvent être occasionnellement commutées de manière rotative sur la boucle de telle sorte que chacune des entrées et des sorties passe d'une première position entre deux colonnes séparées à une seconde position entre deux colonnes différentes, ou
(b) la boucle de plusieurs colonnes peut être occasionnellement commutée de manière rotative de telle sorte que chacune des entrées et des sorties passe d'une première position entre deux colonnes séparées à une seconde position entre deux colonnes différentes, et
dans lequel la phase stationnaire particulaire dudit lit mobile simulé a un diamètre de particule moyen de 100 µm ou moins.

15. Appareil de chromatographie sur lit mobile simulé selon la revendication 14, dans lequel l'épaisseur radiale de la phase stationnaire est dans la plage de 0,5 à 40 cm, de préférence de 1 à 20 cm.
